# EUROPEAN PATENT APPLICATION

(11) **EP 2 805 621 A1**
(43) Date of publication of application: **26.11.2014**
(21) Application number: 13816497.5
(22) Date of filing: 10.07.2013
(51) Int. Cl.: A23L 1/015, A23L 1/237

(54) **METHOD FOR REMOVING NITRATE FROM SOLUTION COMPRISING SALT COMPONENT**

(30) Priority: 10.07.2012 KR 20120074948; 06.03.2013 KR 20130023714
(71) Applicant: Solux Lighting Fixture, Bucheon-si, Gyeonggi-do 420-806 (KR); Yoon, Hyo-suk, Bucheon-si, Gyeonggi-do 422-811 (KR)
(72) Inventor: YOON, Hyo-Suk, Bucheon-si Gyeonggi-do422-811 (KR)
(74) Representative: Vossius & Partner
(86) International application number: PCT/KR2013/006166
(87) International publication number: WO 2014/010950

(57) **Abstract**

The present invention provides a method for removing nitrate from a solution comprising a salt component, wherein the method transplants sulfur bacteria to a sulfur-containing plant, and enables the sulfur-containing plant to which the sulfur bacteria is transplanted to contact a solution that comprises a salt component so as to remove nitrate from the solution comprising the salt component. The present invention also provides a solution comprising the salt component prepared by the method, and provides a salt comprising nitrate of 1.7mg or lower per 100g of salt.

## Description

### [Technical Field]

The present invention relates to a method of removing a nitrate from a solution containing a salt component, a solution containing a salt component in which the content of the nitrate has been minimized, and a salt in which the content of the nitrate has been minimized.

### [Background Art]

Nitrate contained in salt is known as a risk factor of various diseases. That is, when nitrate is taken, the nitrate becomes nitrite by germs of the mouth, and the nitrite reacts with such materials as secondary amine and alchylamine contained in fishes, ports, grains, beer, etc. so as to generate N-nitroso compounds. Hence, when a lot of nitrate is taken, the nitrate can cause a cancer. Hence, it is necessary to take less nitrate, and thus is it needed to use salt which contains less nitrate.

However, nitrate is inevitably generated in the process of preparing salt, and thus it is not easy to prepare salt with less nitrate. If seawater is evaporate to prepare salt, aerobic bacteria in the solution die or excrements decay, and in this process, ammonia is generated, the ammonia forms nitrite, and the nitrite becomes nitrate by microorganisms. Hence, even if the nitrate is completely removed in the state of solution in which salt has been melted, the salt, which is made therefrom, inevitably contains nitrate. The same is applied to other salts such as rock salt or salt in the desert.

Hence, it may be better to use edible salt water in order to avoid nitrate because it is possible to completely remove nitrate in the salt water state.

Further, even when raising marine fishes, nitrate give harmful effects on the survival of the marine fishes. Hence, the way to remove nitrate from the seawater is very important in the survival and growth of marine fishes.

The currently known method of removing nitrate from salt water or seawater is to propagate sulfur bacteria by using mineral sulfur, and to decompose the nitrate into nitrogen or hydrogen sulfide (e.g.: Japanese Patent Publication No. 2002-273475)

However, in this method, mineral sulfur may become a risk factor. That is, mineral sulfur is very harmful to human beings and other lives. Further, this method takes about 2 months in removing nitrate. Hence, using the conventional method in preparing edible salt water has a limit.

### [Disclosure]

### [Technical Problem]

An object of the present invention is to provide a method of rapidly removing nitrate from a solution containing a salt component by using a method which is not harmful to a human body.

Furthermore, another object of the present invention is to provide a solution containing a salt component from which nitrate has been removed by the above method.

Furthermore, another object of the present invention is to provide a salt in which the content of nitrate has been minimized (less than 1.7mg/100g).

Furthermore, another object of the present invention is to provide a salt in which the content of sodium has been minimized.

Furthermore, another object of the present invention is to provide a salt in which the salty state has been significantly reinforced by containing vegetable edible sulfur.

Furthermore, another object of the present invention is to provide a solution containing a salt component containing the vegetable's unique flavor.

### [Technical Solution]

The present invention provides

A method of removing nitrate from a solution containing a salt component in which the method transplants sulfur bacteria to a sulfur-containing plant, and enables the sulfur-containing plant to which the sulfur bacteria is transplanted to contact a solution that contains a salt component so as to remove nitrate from the solution containing the salt component.

Further, the present invention provides

A solution containing a salt component from which

nitrate has been removed by the above method.

Further, the present invention provides

Salt in which the content of nitrate is less than 1.7mg/100g by evaporating water by heating the solution containing the salt component from which nitrate has been removed.

Further, the present inventions provides

Salt containing vegetable edible sulfur.

### [Advantageous Effects]

According to the method of removing nitrate of the present invention, plants containing edible sulfur, which is not harmful to the human body, is used as a source of nutrition of sulfur bacteria, and thus this is very safe and nitrate is very quickly removed from a solution containing a salt component (about 2 to 5 times faster than the existing products).

Hence, the solution containing a salt component, which is prepared by the method of removing nitrate of the present invention, may be very useful in growth of edible lives or lives in the sea.

Furthermore, in the salt of the present invention, the content of nitrate is minimized, and thus the salt may be very useful in growth of edible lives or lives in the sea.

Furthermore, according to the present invention, sodium is consumed by sulfur bacteria in the preparation process, and thus it is possible to provide salt in which the content of sodium has been minimized.

Furthermore, according to the present invention, salt, in which the salty taste has been significantly reinforced by containing edible sulfur, is provided, thereby significantly reducing the consumption of sodium.

Furthermore, according to the present invention, a solution and salt containing a salt component containing the plant's unique flavor may be provided.

### [Description of Drawings]

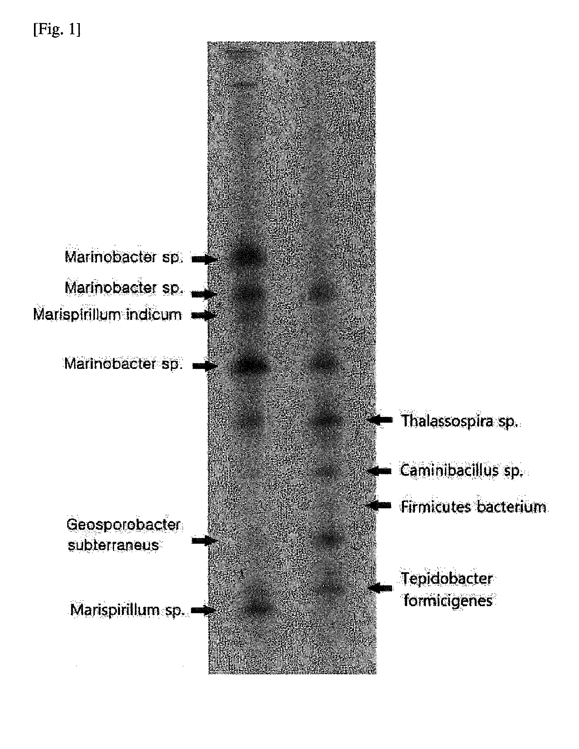

FIG. 1 shows a result of identifying bacteria containing in a salt water of 3-9% salinity from a salt farm in Sinan area (west sea of Korea) by using a temperature gradient gel electrophoresis (TGGE) method.

### [Best Mode]

The present invention relates to
a method for removing nitrate from a solution comprising a salt component, wherein the method transplants sulfur bacteria to a sulfur-containing plant, and enables the sulfur-containing plant to which the sulfur bacteria is transplanted to contact a solution that comprises a salt component so as to remove nitrate from the solution comprising the salt component.

In the present invention, plantation of sulfur bacteria is used as a concept including the proliferated state after transplantation of sulfur bacteria.

Sulfur (element symbol S, atomic number 16, atomic weight 32.066, and an element which belongs to 16(6B) group of the periodic table) is an essential nutrient element of all plants. Sulfur is taken by plants or microorganisms in the form of a sulfate, and the sulfate is reduced to hydrogen sulfide and the hydrogen sulfide may be used in synthesizing amino acids containing sulfur. Further, sulfur is an important element of biological antioxidants like glutathione and various enzymes. Hence, sulfur exists in plants in various forms of enzymes.

Edible sulfur in plants is used, and thus the effects of removing nitrate vary depending on the amount of sulfur contained in the plants used. Plants absorb mineral sulfur in the soil after converting the sulfur into edible sulfur, and thus the absorbed edible sulfur is not harmful to the human body. Hence, edible sulfur is being sold in the market as health supplements (e.g., currently, MSM, which is edible sulfur from pine trees, is sold as nutrients for arthritis.

The content of edible sulfur varies depending on the species of plants, and the content of edible sulfur increases in the order of grasses, legumes, and flowers having 4 petals (grasses < legumes < flowers having 4 petals). Much sulfur is contained in cysteine and methionine, and sulfur is also an element of ferredoxin, biotin, glutathione, and coenzyme A.

Some examples of plants, which contain the sulfur and may be effectively used in removing nitrate, are a Bambusoideae plant, a potato, a garlic, the stalk of a garlic, a ginger, a ginkgo nut, foxtail millet, Chinese millet, a black bean, a white bean, a red bean, a pea, a kidney bean, a mung bean, a African millet, grapefruit skin, lemon skin, mandarin orange skin, Hanrabong skin, lime skin, orange skin, kumquat skin, a ginseng, a carrot, a radish, a radish sprout, a broad bellflower, a green bean sprout, a bean sprout, a peanut, a mugwort, a pumpkin, rosemary, a rose, a branch of a pine, a pine needle, Acanthopanax, chard, a spring onion, a wild rocambole, a broccoli, a candle plant, a pineapple sage, a lemon balm, a spearmint, an apple mint, a pineapple mint, a green tea leaf, a cabbage, and a red cabbage. The above plants may be used solely or as a combination of two or more kinds.

The roots, stalks, and leaves of the plants also show the same effects.

The effects of the plants have been confirmed by experiments, but other plants containing various kinds of sulfurs may be used in the present invention. In particular, even when there is no or insufficient effects of removing nitrate, if there is the plant's unique flavor, it is possible for the plant to be combined with other plants having the effects of removing nitrate.

That is, the function for removing nitrate may be set to be performed by plants containing sulfur having the effects of removing nitrate, and adding the flavor to the salt water or salt may be set to be performed by plants with no or insufficient effects of removing nitrate. Hence, it is possible to use plants without containing sulfur in the present invention in order to provide the plant's unique flavor.

When salt water or salt, from which nitrate has been removed, is prepared, the plant's unique flavor is added to the salt water or salt, and thus it is possible to prepare salt water or salt having the plant's unique flavor (taste and smell).

For example, bamboo shoots having strong effects of removing nitrate and pine needles having insignificant effects of removing nitrate are put together in a solution containing a salt element and the nitrate is removed, then salt water and salt with the fragrance of pine needles may be prepared.

Further, salt water and salt with the fragrance of lemons or oranges, from which nitrate has been almost removed, may be prepared by using bamboo shoots and orange skin or lemon skin. This is different from salt having the fragrance of lemons and containing nitrate which is simply prepared by melting lemons.

Further, by mixing beans (soybeans) with bamboo shoots, potassium is reinforced, and thus potassium-reinforced salt without nitrate for discharging sodium may be prepared.

One of plants for effectively removing nitrate from among plants containing sulfur is bamboo shoots. Here, the bamboo is a general term of perennial plants which belong to Bambusoideae. In particular, Sasa borealis may be favorably used among the bamboos.

The bamboo contains edible sulfur, and thus all of leaves, stems, shoots, and roots may be used. In particular, the roots of the bamboos contain a lot of stomata contain a lot of sulfur, and thus the roots may be favorably used in transplantation and propagation of sulfur bacteria.

The amounts of sulfur elements of Sasa borealis are different depending on the produced area, the cultivated and harvested season, and the dried level. That is, the Nonsan area Sasa borealis, which is produced in summer, contains less sulfur, and Jeju area Sasa borealis, which is produced in the volcanic region, contains relatively a large amount of sulfur. Hence, it is preferable to select and use bamboos containing a lot of sulfur.

The capabilities of removing nitrate of plants containing sulfur are as follows.

Bamboo shoots > legumes > Chinese millets, foxtail millets > garlics, garlic flower stalks > potatoes, gingers > skins of mandarin oranges, etc. > ginkgo nuts, ginkgo nut leaves

However, such a result may be different depending on various conditions such as salinity, cultivating environment, cultivating time, and experiment temperature. For example, in the case of plants which use a lot of nitrogenous fertilizers, the plants themselves may contain a lot of nitrate, and thus it may be difficult to exhibit desirable effects in the use of removing nitrate. Hence, the plants, which do not use the nitrogenous fertilizers, may be appropriately used in the present invention.

In the present invention, sulfur bacteria are classified as sulfur reduction bacteria and sulfur oxidation bacteria.

The sulfur bacteria are germs which obtain energy needed in the growth by oxidizing sulfur or inorganic compounds, and grow in salt water of a salt farm, soil, etc. The sulfur bacteria may include Leucothiobacteria and chromothiobacteria.

Sulfur bacteria oxidize hydrogen sulfide, other sulfides, etc. for proliferation, and do not need organic carbon compounds in the nutrition.

Leucothiobacteria include Beggiatoa and Thiothrix, and some like alkalinity and some others like acidity.

Chromothiobacteria include Thiobacillus and perform photosynthesis with red or green pigments and by using sunbeam.

Sulfate reducing bacteria and sulfur reducing bacteria may be used as the sulfur reducing germs.

Some examples of the sulfate reducing bacteria are Desulfovibrio and Desulfotomaculum, and an example of sulfur reducing bacteria is Desulfuromonas.

Further, sulfur oxidation bacteria may be used in the present invention.

### (1) Marinobacter sp. GenBank accession number JQ618280

Marinobacter sp. germs exhibit the highest denitrification effects in the salt concentration of 3 to 6%. The concentration of salt, which shows the optimal denitrification, is 3%. Neutral pH is most appropriate. Marinobacter sp. germs have the function of reducing nitrate into molecular nitrogen (N2) by using succinate as the energy source. The denitrification effects are shown in anaerobic conditions without oxygen, and thus it is possible to live in deposits on the floor of the ocean (related theses: Miyo Nakano, Tadashi Inagaki, SuguruOkunishi, Reiji Tanaka and Hiroto Maeda, "Effect of salinity on denitrification under limited single carbon source by Marinobacter sp. isolated from marine sediment". Journal of Basic Microbiology, 2010, 50, pages 285-289;

Bo-Ram Choi, VinhHoa Pham, Soo-Je Park, So-Jeong Kim, Dong-Hyun Roh, Sung-Keun Rhee, "Chracterization of facultative sulfur-oxidizing Marinobacter sp. BR13 isolated from marine sediment of yellow sea, Korea", Journal of Korean Society for Applied Biological Chemistry, 2009, 52, pages 309-314).

In the above second thesis, germs, which are separated from deposits of the Yellow Sea in Korea, may grow in the range of 0.5 to 9% salt concentration and 7 to 37°C and use sugar and organic acids, etc. as the carbon source. In the concentrating culturing process, the germs grow by using thiosulphate as the energy source, and thus they are referred to as selective sulfation bacteria

### (2) Marispirillumindicum, GenBank accession number NR044545

Marispirillumindicum grows in the ragne of 0.5 to 12% salt concentration and 10 to 41°C. And has denitrification effects (related thesis: Lai Q, Yuan J, Gu L and Shao Z., "Marispirillumindicumgen. nov., sp. nov., isolated from a deep-sea environment", International Journal of Systematic and Evolutionary Microbiology, 2009, 59, pages 1278-1281).

### (3) Thalassospira sp. GenBank accession number AB373113

Germs, which use aromatic hydrocarbon compounds and belong to Thalassospira sp., grow in the 2 to 14% salt concentration, but the optimal salt concentration for growth is 3% as in the seawater. The germs grow in the range of 8 to 45°C, but the optimal temperature for growth is 43°C. The germs may use glucose as the substrate and have the function of reducing nitrate (related thesis: Yumiko Kodama, Lies Indah Stiknowati, Atsuko Ueki, Katsuji Ueki and Kazuya Watanabe, "Thalassospiratepidiphilasp. nov., a polycyclicaromatic hydrocarbon-degrading bacteriumisolated from seawater" ,International Journal of Systematic and Evolutionary Microbiology, 2008, 58, pages 711-715).

### (4) Caminibacillus sp. GenBank accession number AB752312

They grow in the range of 45 to 65°C, and the optimal temperature is 55 to 60°C. They grow around the hot water gushing part of the deep sea. In the hot water gushing part, sulfur is gushed, and thus the sulfur may be oxidized and used as the energy source. The growth is possible in the salt concentration of 2 to 6%. They have the function of reducing the nitrate in the anaerobic condition (related thesis: Alain K, Pignet P, Zbinden M, Quillevere M, Duchiron F, Donval JP, Lesongeur F, Raguenes G, Crassous P, Querellou J, and Cambon-Bonavita MA. "Caminicella(Caminibacillus) sporogenesgen. nov., sp. nov., a novel thermophilic spore-forming bacterium isolated from an East-Pacific Rise hydrothermal vent", International Journal of Systematic and Evolutionary Microbiology, 2002, 52, pages 1621-1628).

Tepidibacterformicigenes, GenBank accession number JQ670743

They are sporforming Chemoheterotrophic germs. They may grow in the range of 2 to 6% salt concentration, but the optimal concentration is 3%. The pH range for growth is 5 to 8, and the organic matters (sugar, organic acids) are used as nutrition for growth (related thesis: Urios L, Cueff V, Pignet P, and Barbier G. "Tepidibacterformicigenessp. nov., a novel spore-forming bacterium isolated from a Mid-Atlantic Ridge hydrothermal vent", International Journal of Systematic and Evolutionary Microbiology, 2004, 54, pages 439-443).

Further, in the present invention, the following denitrification bacteria may be used along with sulfur bacteria.

### (6) Geosporobactersubterraneus, GenBank accession number DQ643978

They grow in the deep sea, and thus they use organic materials as the substrate. They may grow in the range of 30 to 55°C, but the optimal temperature is 42°C. The optimal salt concentration for growth is 4%. They may grow in the range of pH 5.6 to 8.4, but the optimal pH is 7.3 (related thesis: Klouche N, Fardeau ML, Lascourreges JF, Cayol JL, Hacene H, Thomas P, and Magot M., " Geosporobactersubterraneus gen. nov., sp. nov., a spore-forming bacterium isolated from a deep subsurface aquifer" , International Journal of Systematic and Evolutionary Microbiology, 2007, 57, pages 1757-1761).

(7) Firmicutesbacterium, GenBank accession number JX240960

Firmcutes are not halophilic, but may be in charge of denitrification in the low salt concentration less than 3% (related thesis: Young-Woon Lim, Soon-Ae Lee, Seung Bum Kim3, Hae-Young Yong2, Seon-HeeYeon, Yong-Keun Park, Dong-Woo Jeong, and Jin-Sook Park, "Diversity of Denitrifying bacteria isolated from Daejeon sewage treatment plant", The Journal of Microbiology, 2005, 43, pages 383-390).

Among the germs, the germs, which belong to Marinobacter, Marispirillum, Thalassospira, and Caminobacillus, are in charge of denitrification in the environment with a high salinity. Among the germs, Nos. 1, 2, 3, 4, and 5, which are sulfation bacteria, are mainly oxidized to generate biochemical energy and denitrification germs (Nos. 5, 6, and 7) reduce nitrate by using the energy source produced by other germs, and thus when the sulfation bacteria and denitrification germs are used together, sulfation and the reduction of nitrate may be performed.

Among the germs, no. 5 is bacteria which inhabit in places without a lot of sulfur, and at the same time, organic matters are also used as nutrients.

The germs do not reduce the nitrate with the energy source which is generated by only the biochemical oxidation process of sulfur in the condition that the organic matters are completely excluded, but use various organic matters and sulfur as the energy source which exist in the water, and remove nitrate by the denitrification reaction by producing biochemical energy by using nitrate as the electron accepter instead of oxygen in the anaerobic condition.

Oxidation bacteria of nos. 1, 2, 3, 4, and 5 and denitrification bacteria of nos. 6 and 7 appropriately remove nitrate by using edible sulfur and organic matters as the energy source even in a high salinity (3% or more).

Bacteria of nos. 1 to 7 may be extracted from salt water of a salt farm of the salinity of 3 to 27% (w/v). For example, the extraction may be performed by transplanting bacteria after putting a plant containing sulfur in the salt water of a salt form or seawater in the deep sea of the salinity of 3 to 27% (w/v).

Hence, when bacteria, which is extracted from the salt water of a salt farm of the salinity of 3 to 27%, are used, all nutrients, which are needed in the growth of germs such as sulfur and organic matters from plants containing sulfur, are supplied, and thus nitrate may be efficiently removed.

The bacteria are well proliferated even in temperatures of 5 to 70°C and absorb nitrate well.

In the present invention, a solution containing a salt element refers to a solution in which a salt element, i.e., NaCl is melted, and more specifically, refers to salt water or seawater.

This method may be performed in a manner that additionally dips a plant containing sulfur which is not bacteria-transplanted in the step of making the plant containing the bacteria-transplanted sulfur contact the solution containing the salt element for removing nitrate.

Further, the method may be performed in a manner that makes the plants without bacteria-transplanted sulfur as well as plants with sulfur contact the solution containing the salt element in the step of making the plant containing the bacteria-transplanted sulfur contact the solution containing the salt element for removing nitrate. In this case, the added plant does not contain sulfur and thus does not remove nitrate, but may provide the plant's unique flavor to the salt water.

Further, the method may also be performed in a manner that further dips the plant without sulfur as well as the plant with sulfur, to which bacteria has not been transplanted, in the step of making the plant containing the bacteria-transplanted sulfur contact the solution containing the salt element for removing nitrate.

Further, the method may be performed in a manner that adds edible sulfur extracts extracted from plants containing sulfur in the step of making the plant containing bacteria-transplanted sulfur contact the solution containing the salt element for removing nitrate.

Further, all these processes may also be performed by extracting edible sulfur from a plant containing sulfur. In this case, edible sulfur may be extracted by a method which is commonly used in this field. For example, a plant containing sulfur may be boiled in the water of 50 to 120°C so as to extract edible sulfur.

However, some bacteria remove nitrate by decomposing organic matters, and thus it is more desirable to directly use a plant containing sulfur so that unique organic matters contained in fibroid materials may be used together.

In the method of the present invention, only a small amount of plants from among the overall plants containing sulfur may be used in the operation of transplanting bacteria, and the other plants contacting sulfur may be preferably dipped in the solution containing the salt element for removing nitrate. It is because there are plants which are easy to transplant sulfur bacteria and plants which are difficult to directly transplant sulfur bacteria, from among plants containing sulfur. Hence, plants having a hard structure like bamboos and Sasa borealis have a favorable condition for transplanting sulfur bacteria, and thus nitrate can be more effectively removed if the sulfur bacteria are transplanted in Sasa borealis, then the pieces of the Sasa borealis are put in a plant having a lot of edible sulfur.

A plant having bacteria-transplanted sulfur and a plant having sulfur to which bacteria have not been transplanted may be the same plant or different plants.

The method of removing nitrate of the present invention is preferably performed in anaerobic conditions. It is because sulfur bacteria remove nitrate by denitrification reaction by producing biochemical energy by using nitrate as the electron acceptor instead of oxygen in anaerobic conditions. That is, in aerobic conditions, sulfur bacteria use oxygen as the electron acceptor, and thus it is difficult to expect the effects of removing nitrate.

Further, the present invention relates to
a solution containing a salt element from which nitrate has been removed.

Some examples of such a solution containing the salt element are edible salt water and seawater.

The edible salt water includes salt water which is used in the process of preparing foods. The salt water may be very usefully used as a substitute of salt. For example, the salt water may be used to season a food with salt, may be used as a coagulant at the time of preparing bean curd, and may be used to salt kimchi.

The present invention relates to

A salt having less than 1.7mg nitrate per 100g salt, which is prepared by evaporating water from a solution containing a salt element.

Here, it is even better to set the level of nitrate to be less than 1mg per 100g salt.

The salt water of a high salinity (greater than 25%), from which nitrate has been completely removed, has sulfur bacteria therein. However, such activities become dull in the high salinity state, and the bacteria die in the process when salt is made by water evaporation so as to generate nitrate. Hence, it is impossible to prepare salt from which nitrate has been almost completely removed.

However, the salt water, which is prepared by removing nitrate by the method of the present invention, is rapidly heated in the range of 90 to 120°C, is rapidly heated by a microwave oven, is rapidly evaporated by strong light, or is lyophilized, it is possible to obtain salt with less than 1.7mg nitrate/100g salt. In particular, in the case of lyophilization, bacteria in the lyophilized salt is not rotten, but is dried, and thus the content of nitrate rarely increases.

Here, the rapid heating means 1 to 30 minutes, but preferably completing drying for 1 to 10 minutes.

The content of nitrate of bay salt sold in the market is about 4.3 to 6.7mg/100g, and the content of nitrate of chemical salt is about 3.7mg/100g. Salt with less nitrate is not known. Further, it is recognized that to prepare such salt is very difficult.

Hence, when considering this situation, salt with less than 5mg nitrate of the present invention is very significant.

According to the present invention, salt with minimum nitrate is prepared by allowing bacteria to remain in a form like nucleic acid within salt by rapidly evaporating water from salt water of very high salinity.

Further, the present invention provides salt in which the content of sodium is minimized.

A very small amount of sodium is required in metabolism of some bacteria. Sodium plays an important role in movement of materials with electric charge in eukaryotic cells. Halophilic bacteria need sodium (Na+) for movement of materials (BIOPROCESS ENGINEERING BASIC CONCEPTS, second edition, MICHAEL L. SHULER, page 59). In the present invention, halophilic sulfur bacteria are used, and such halophilic bacteria use a very little amount of sodium. Hence, it is possible to provide salt in which the content of sodium has been minimized.

The present invention also provides salt which contains vegetable edible sulfur. The vegetable edible sulfur performs a function of reinforcing the salty taste of salt.

The salt, from which nitrate has been removed by sulfur bacteria, is salty twice than the existing refined salt. It is because edible sulfur and potassium contained in bamboo shoots or legumes taste bitter. Potassium and edible sulfur contained in plants usually taste bitter and provide effects of making those who taste the salt feel more salty. That is, salt, which is prepared by the present invention by using edible sulfur and sulfur bacteria, still contains edible sulfur, and thus the salty taste is significantly reinforced. Currently, salt, in which the salty taste has been reinforced by using the bitter taste of potassium, is sold to reduce the intake of sodium, but according to the present invention, the salty taste is reinforced more safely by using edible sulfur.

When more than 500mg edible sulfur is contained in 50g salt, a person can feel reinforced salty taste, and when about 1500mg edible sulfur is contained in 50g salt, the salty taste is doubled. The content of edible sulfur contained in the salt may vary according to the kind of plants or the number of sulfur bacteria used.

Salt water and salt of high salinity, which are obtained by sulfur bacteria in the present invention, also have effects in reducing the speed of natural nitrate increase in vegetables and foods.

### [Detailed Description of Exemplary Embodiments]

Hereinafter, the present invention will be described with reference to the embodiments. However, the present invention is not limited to the embodiments described below and it is obvious that the embodiments can be changed to other embodiments within the scope of the present invention.

### Comparative example 1: Preparation of salt water without nitrate

Nitrate remover sold in the market (mineral sulfur is used) (product name: LSM, manufacturing company: Sarib-sea) was purchased so as to remove nitrate contained in salt water. First, salt water 1L of 9% salinity is poured in a cylinder-shaped container, and the nitrate remover is added according to the amount of use displayed in the products. The concentration of nitrate is checked with the nitrate measuring kit after waiting for some time until the nitrate is removed enough. As a result, it was found that the concentration of nitrate became 0mg/L after 60 days.

### First embodiment: Preparation of salt without nitrate (sulfur reducing bacteria is used)

10L salt water of 9% salinity containing nitrate is poured in a cylinder-shaped container. Roots of Sasa borealis are but into pieces of 1cm to 2cm, and sulfur reducing bacteria (LSM of Carbi Sea company is purchased and extracted; the bacteria name is sulfur reducing bacteria, "Desulfuromonas") is transplanted. And the bacteria-transplanted roots of Sasa borealis are filled from the bottom of the cylinder-shaped container to the surface of the water. Temperature is maintained at normal temperatures, and the container is covered with a lid to block the external air. The concentration of the nitrate was measured after 6 days from the starting date, and it was confirmed that the concentration of nitrate was 0mg/L and the Sasa borealis pieces were taken out from the cylinder-shaped container. The remaining salt water was filtered and was then poured in a separate container to prepare salt water without nitrate.

As checked in the above experiment, the method of removing nitrate of the present invention is much faster (about 2 to 3 times) than that of the products which are now sold in the market.

Second embodiment: Preparation of salt water without nitrate

### (1) Extracting bacteria from salt water in a salt farm

1) Method of directly transplanting bacteria in a plant to be used
   A plant (root pieces of Sasa borealis) containing sulfur which has been cut into pieces of 1 to 2cm is put in the salt water of 9% salinity from a salt farm of Sinan area of West Sea of Korea, and it is then matured in the range of 20 to 35°C for three days so as to transplant bacteria in Sasa borealis.
2) Method of preparing bacteria transplanted pieces by using a separate plant
   Transplanted pieces (root pieces of Sasa borealis) which have been cut into pieces of 1 to 2cm are put in the salt water of 9% salinity from a salt farm of Sinan area of West Sea of Korea, and they are then matured in the range of 20 to 35°C for 15 days so as to transplant and proliferate sulfation bacteria in Sasa borealis.

### (2) Removing nitrate from salt water (sulfation bacteria, etc. are used)

A glass container of 180ml to be used in an experiment and salt water of 9% (3 to 28% are possible) salinity of bay salt are disinfected in 90°F in order to prevent entrance of other bacteria, and plants to be used are also sterilized by dipping them in boiled water for 5 seconds to prevent entrance of other bacteria.

Salt water is poured in the glass container, and the concentration of nitrate is measured with absorption scheme of the spectrophotometer and the No3 profi test kit color measurement scheme of Tetra and Salifert. Then each 30g plant of Table 1 is put in the glass container so that salt water is not overflown, and one of root pieces (1 to 2 cm) of Sasa borealis which is obtained by proliferating sulfation bacteria is put in plants and then the container is shaken slightly not to have a bubble.

The experimental container is matured in the temperature range of 20 to 35°C, and the removed amount of nitrate is measured with the absorption scheme of the spectrophotometer and the No3 profi test kit color measurement scheme of Tetra and Salifert.

Here, the plants are washed and are cut into pieces of 1 to 2cm so as to be used. Fruits such as beans, mung beans, foxtail millet, and gingko nuts are used as themselves just after peeling off the skin. Other branches and some things with a large volume have been cut into pieces of 1 to 2 cm so as to be used. Plants are cut into pieces for easy contact between edible sulfur and sulfur bacteria and growth.

**Table 1**

| | **Plant** | **Content of nitrate (mg/l)** | **Measuring days (Maturing period) (Period when nitrate is removed much)** | **Remarks** |
|---|---|---|---|---|
| 1 | Bamboo shoot | 1 mg/l or less | 4-6 days | Possible to remove nitrate up to 0 mg/l |
| 2 | Root of Sasa borealis | 2mg/l or less | 5-9 days | Nitrate concentration increases during the first 1 to 3 days, and from the fourth day, the nitrate is removed. |
| 3 | Potato | 2mg/l or less | 3-6 ays | Possible to remove nitrate up to 0 mg/l, but when matured for a long time, nitrate concentration increases |
| 4 | Garlic | 2mg/l or less | 3-4 days | When matured for more than 12 days, nitrate concentration increases again/bubbles are generated/when preparing salt, garlic smell is strong |
| 5 | Stalk of garlic | 2mg/l or less | 4-12 days | Nitrate is removed as matured longer than garlic |
| 6 | Ginger | 2mg/l or less | 7 - 14 days | Nitrate concentration slightly increases at first 1 to 6 days, and then nitrate is removed. |
| 7 | Ginkgo nut | 2mg/l or less | 4-5 days | Possible to remove nitrate up to 0 mg/l |
| 8 | Ginkgo leaf | 2mg/l or less | 10-15 | Have effects, but after 15 days, decayed smell may be generated |
| 9 | Foxtail millet | 2mg/l or less | 3-20 days | When matured even for a month, nitrate concentration does not increase again. Possible to remove nitrate up to 0 mg/l |
| 10 | Chinese millet | 2mg/l or less | 3-20 days | When matured even for a month, nitrate concentration does not increase again. Possible to remove nitrate up to 0 mg/l |
| 11 | Black bean | 2mg/l or less 4-20 or | 4-20 days | When matured even for a month, nitrate concentration does not increase again. |
| 12 | White bean | 2mg/l or less | 4-20 days | When matured even for a month, nitrate concentration does not increase again. |
| 13 | Red bean | 3mg/l or less | 4-15 days | When matured even for a month, nitrate concentration does not increase again. |
| 14 | Pea | 3mg/l or less | 4-20 days | When matured even for a month, nitrate concentration does not increase again. |
| 15 | Kidney bean | 3mg/l or less | 4-20 days | When matured even for a month, nitrate concentration does not increase again. |
| 16 | Mung bean | 2mg/l or less | 4-25 days | When matured even for a month, nitrate concentration does not increase again. Possible to remove nitrate up to 0 mg/l |
| 17 | African millet | 4mg/l or less | 14-15 days | |
| 18 | Grapefruit skin | 3mg/l or less | 4-8 days | When matured for more than 20 days, nitrate concentration increases slightly. |
| 19 | Lemon skin | 3mg/l or less | 4-15 days | Up to 25 days, nitrate concentration does not increase again. |
| 20 | Mandarin orange skin | 3mg/l or less | 4-15 days | Up to 25 days, nitrate concentration does not increase again. |
| 21 | Hanrabong skin | 3mg/l or less | 4-10 days | Up to 25 days, nitrate concentration does not increase again. |
| 22 | Lime skin | 3mg/l or less | 4-12 days | Up to one month, nitrate concentration does not increase again. |
| 23 | Orange skin | 3mg/l or less | 4-15 days | Up to one month, nitrate concentration does not increase again. |
| 24 | Kumquat skin | 3mg/l or less | 4-12 days | Up to one month, nitrate concentration does not increase again. |
| 25 | Pomegranate skin | 3mg/l or less 4-12 or less | 4-12 days | Up to one month, nitrate concentration does not increase again. |
| 26 | Ginseng | 4mg/l or less | 5-25 days | When matured for more than 15 days, the effects of removing nitrate are exhibited. |
| 27 | Carrot | 4mg/l or less | 5-20 days | When matured for 10 or more days, good effects of removing nitrate are exhibited. |
| 28 | Radish sprout | 7mg/l or less | 4-6 days | When matured for a long time, nitrate concentration may increase again. |
| 29 | Radish | 5mg/l or less | 8-15 days | When matured for more than 10 days, the effects of removing nitrate are exhibited. |
| 30 | Turnip | 5mg/l or less | 8-17 days | When matured for more than 10 days, the effects of removing nitrate are exhibited. |
| 31 | Broad bellflower | 6mg/l or less | 8-17 days | When matured for more than 12 days, good effects of removing nitrate are exhibited. |
| 32 | Green bean sprout | 17mg/l or less | 5-15 days | When matured for a long time, it may decay (stalk part). |
| 33 | Bean sprout | 7mg/l or less | 5-15 days | When matured for a long time, it may decay (stalk part). |
| 34 | Peanut | 5mg/l or less | 4-15 days | Up to 15 days, nitrate concentration does not increase again. |
| 35 | Mugwort | 8mg/l or less | 8-17 days | When matured for more than 10 days, the effects of removing nitrate are exhibited. |
| 36 | Pumpkin | 6mg/l or less | 7-15 days | |
| 37 | Rosemary | 8mg/l or less 8mg/l | 8-17 days | The effects of removing nitrate are not high, but it adds flavor when preparing salt. |
| 38 | Rose | 6mg/l or less | 8-17 days | The best effects of removing nitrate among herb plants |
| 39 | Pine branch | 8mg/l or less | 15-30 days | When matured for a long time, the effects of removing nitrate are exhibited. |
| 40 | Pine needle | 8mg/l or less | 15-40 days | When matured for a long time, the effects of removing nitrate are exhibited. |
| 41 | Acanthopanax | 8-7mg/l | 8-30 days | When matured for a long time, the effects of removing nitrate are exhibited / easy to remove color by mixing with other plants |
| 42 | Chard | 10mg/l or less | 8-17 days | Nitrate concentration increases for the first 1 to 3 days, and then a little is removed after 7 days. |
| 43 | Ginseng shreds | 10mg/l or less | 5-10 days | High content of edible sulfur, but easily go bad. |
| 44 | Spring onion (stalk and root) | 8mg/l or less | 8-17 days | High content of edible sulfur, but easily go bad. |
| 45 | Wild rocambole leaf | 9mg/l or less | 3-7 days | When matured for 10 or more days, nitrate concentration increases. |
| 46 | Wild rocambole root | 9mg/l or less | 3-7 days | When matured for 10 or more days, nitrate concentration increases. |
| 47 | Broccoli | 6mg/l or less | 3-10 days | When matured for 25 or more days, nitrate concentration may increase. |
| 48 | Candle plant | 8-6mg/l | 3-20 days | The effects of removing nitrate are not high, but it adds flavor when preparing salt. |
| 49 | Pineapple sage | 8-5mg/l | 3-20 days | The effects of removing nitrate are not high, but it adds flavor when preparing salt. |
| 50 | Lemon balm | 8-6mg/l | 3-20 days | The effects of removing nitrate are not high, but it adds flavor when preparing salt. |
| 51 | Pineapple mint | 8-5mg/l | 3-20 days | The effects of removing nitrate are not high, but it adds |
| | | | | flavor when preparing salt. |
| 52 | Green tea leaf | 8-5mg/l | 3-20 days | The effects of removing nitrate are not high, but it adds flavor when preparing salt. |
| 53 | Apple mint | 8-6mg/l | 3-20 days | The effects of removing nitrate are not high, but it adds flavor when preparing salt. |
| 54 | Mustard leaf | 9-6mg/l | 5-15 days | Brassicaceae, but removes nitrate slightly. |
| 55 | Green tea leaf | 8-6mg/l | 3-15 days | |
| 56 | Cabbage | 3mg/l or less | 10 days | |
| 57 | Red cabbage | 2mg/l or less | 10 days | |

As shown in Table 2 above,

All the experimented plants exhibited the power of removing nitrate. Hence, when removing nitrate by using such plants, the nitrate-minimized salt water and salt may be prepared. Further, salt water and salt having the plant's unique flavor (taste and smell) may be prepared.

### Third embodiment: Preparation of nitrate-minimized salt

Salt water, which is prepared in no. 1 (bamboo shoot is used as the plant containing edible sulfur) of the second embodiment, is heated to 90 to 100°C, and water is evaporated within 2 minutes so as to prepare fine salt. In order to measure the amount of nitrate contained in the prepared salt, prepared salt 1g is melted in distilled water 300ml, and then the content of nitrate was measured by using Test No. 3 measuring kit of Tetra company (Germany, www.tetra.net). As a result, the content of nitrate was 1.3mg/100g.

### Fourth embodiment: Measuring content of sodium and content of edible sulfur of prepared salt

### (1) Measuring content of sodium

Content of sodium, which is contained is salt prepared in the third embodiment, was measured by the sodium electron ion measuring scheme. That is, bay salt 100g, which was purchased, and salt 100mg, which was prepared in the third embodiment, were respectively melted in distilled water 100ml so as to prepare a salt solution, and the content of sodium contained in each salt solution was measured in normal temperatures according to the sodium electron ion measuring scheme.

As a result of the experiment, it was confirmed that sodium was less contained by 13mg to 15mg/L in the salt solution which was prepared in the third embodiment, compared to the salt solution which was prepared by bay salt which was purchased in the market. This shows that sodium has been consumed by halophilic bacteria in the process of preparing sodium.

### (2) Measuring content of edible sulfur

The content of edible sulfur, which was contained in the salt prepared in the third embodiment, was measured by the sulfur icon electrode measuring scheme. As a result, it was found that about edible sulfur 1000mg were contained in salt 50g.

### (3) Checking relation between the content of edible sulfur and salty taste

The relation between the content of edible sulfur and salty taste was checked with 20 testees. The testees include 13 women in 30s and 7 men in forties. The testees tasted salts having various contents of edible sulfur and evaluated and recorded the level of salty taste.

As a result, 12 persons felt that the salty taste was reinforced when 500mg or more edible sulfur were contained per 50g salt, and when 1500mg was contained, 16 felt that the salty tasted was more than doubled.

### Fifth embodiment: Identifying sulfation bacteria

Bacteria contained in root pieces of bacteria-transplanted Sasa borealis in 2) of (1) of the second embodiment were identified with the temperature gradient gel electrophoresis (TGGE) method, and the result photograph is shown in FIG. 1. Further, each DNA band is cut, extracted, and refined, and is then amplified. Then the DNA sequence is analyzed through a specialized company, then the bacteria were identified based on the database of GenBank by using the result.

As a result of the identification, it was found that the salt water contains Marinobacter sp.(GenBank accession number JQ618280), Marispirillumindicum(GenBank accession number NR044545), Thalassospira sp.(GenBank accession number AB373113), Caminibacillus(GenBank accession number AB752312), Tepidibacterformicigenes(GenBank accession number JQ670743), Geosporobactersubterraneus(GenBank accession number DQ643978), and Firmicutesbacterium(GenBank accession number JX240960)

## Claims

1. A method of removing nitrate from a solution containing a salt element by transplanting sulfur bacteria in a plant containing sulfur and making the sulfur-bacteria-transplanted plant containing sulfur contact the solution containing the salt element.

2. The method of claim 1, wherein the plant containing the sulfur may be one or more of a Bambusoideae plant, a potato, a garlic, the stalk of a garlic, a ginger, a ginkgo nut, foxtail millet, Chinese millet, a black bean, a white bean, a red bean, a pea, a kidney bean, a mung bean, a African millet, grapefruit skin, lemon skin, mandarin orange skin, Hanrabong skin, lime skin, orange skin, kumquat skin, a ginseng, a carrot, a radish, a radish sprout, a broad bellflower, a green bean sprout, a bean sprout, a peanut, a mugwort, a pumpkin, rosemary, a rose, a branch of a pine, a pine needle, Acanthopanax, chard, a spring onion, a wild rocambole, a broccoli, a candle plant, a pineapple sage, a lemon balm, a spearmint, an apple mint, a pineapple mint, a green tea leaf, a cabbage, and a red cabbage.

3. The method of claim 1, wherein the sulfur bacteria are sulfating bacteria or sulfur-reducing bacteria.

4. The method of claim 1, wherein, when making the sulfur-bacteria-transplanted plant containing sulfur contact the solution containing the salt element, a plant without sulfur is also set to contact the solution containing the salt element.

5. A solution containing a salt element, from which nitrate has been removed by the method of claim 1.

6. The solution of claim 5, wherein the solution containing the salt element is edible salt water or seawater.

7. Salt, which is prepared by water evaporation by heating the solution containing the salt element of claim 5, or by lyophilization, and in which nitrate content is less than 1.7mg per 100g salt.

8. Salt of claim 7, in which the content of the salt is less than 1mg per 100g salt.

9. Salt containing vegetable edible sulfur, which is prepared by water evaporation by heating the solution containing the salt element of claim 5, or by lyophilization.
